(19) Europäisches Patentamt
European Patent Office
Office européen des brevets

(11) Veröffentlichungsnummer: **0 043 411**
**B1**

(12) # EUROPÄISCHE PATENTSCHRIFT

(45) Veröffentlichungstag der Patentschrift: **11.07.84**

(51) Int. Cl.³: **C 09 B 62/01**, D 06 P 3/66, D 06 P 3/10

(21) Anmeldenummer: **81103055.0**

(22) Anmeldetag: **23.04.81**

(54) **Dis-Azoreaktivfarbstoffe, Verfahren zu ihrer Herstellung und ihre Verwendung zum Färben und Bedrucken von stickstoff- und/oder hydroxylgruppenhaltigen Materialien.**

(30) Priorität: **03.07.80 DE 3025244**

(43) Veröffentlichungstag der Anmeldung: **13.01.82 Patentblatt 82/2**

(45) Bekanntmachung des Hinweises auf die Patenterteilung: **11.07.84 Patentblatt 84/28**

(84) Benannte Vertragsstaaten: **CH DE FR GB LI**

(56) Entgegenhaltungen: **EP-A-0 013 936**
**DE-A-2 232 541**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft neue Disazoreaktivfarbstoffe, die der Formel I entsprechen:

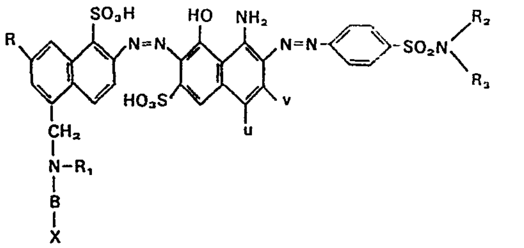

(I)

worin

R=Wasserstoff oder eine Sulfogruppe;

$R_1$=Wasserstoff oder $C_1$-$C_4$-Alkyl;

B=direkte Bindung oder Brückenglied;

X=Reaktivgruppe;

u und v=Wasserstoff oder eine Sulfogruppe, wobei u≠v, und

$R_2$ und $R_3$=Wasserstoff oder $C_1$-$C_4$-Alkyl.

Aus der DE-A Nr. 2232541 sind ähnlich strukturierte Disazofarbstoffe bekannt. Demgegenüber zeigen die erfindungsgemässen Farbstoffe überlegene färberische Eigenschaften.

Bevorzugte Brückenglieder B sind:

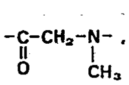 , 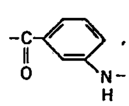 , 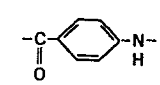 ,

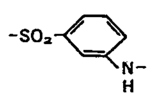 , 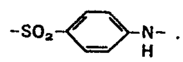 .

Besonders bevorzugt steht B für eine direkte Bindung.

Unter Reaktivgruppen X werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in grosser Zahl bekannt.

Erfindungsgemäss geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6gliedrigen heterocyclischen Ring gebunden enthalten, wie an einen Monazin-, Diazin-, Triazin-, z.B. Pyridin-, Pyrimidin-, Pyridazin, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin-, Phenazin- und Phenanthridinringsystem; die 5- oder 6gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6gliedrige carbocyclische Ringe ankondensiert enthalten können.

Unter den reaktiven Substituenten am Heterocyclus sind beispielsweise zu erwähnen: Halogen (Cl, Br oder F); Ammonium, einschliesslich Hydrazinium, Sulfonium, Sulfonyl, Azido ($N_3$), Rhodanido, Thio, Thioether, Oxyether, Sulfinsäure und Sulfonsäure.

Im einzelnen sind beispielsweise zu nennen: Mono- oder Dihalogensymmetrischetriazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)amino-4-chlor-triazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)oxy-4-chlortriazinyl-6-, 2-(o-, m- oder p-Methyl- oder Methoxyphenyl)oxy-4-chlortriazinyl-6-, 2-Alkylmercapto- oder 2-Arylmercapto- oder 2-(substituiertes Aryl)mercapto-4-chlortriazinyl-6-, wie 2-β-Hydroxyethylmercapto-4-chlortriazinyl-6-, 2-Phenylmercapto-4-chlortriazinyl-6-, 3-(4'-Methylphenyl)mercapto-4-chlortriazinyl-6-, 2-(2',4'-Dinitro)phenylmercapto-4-chlortriazinyl-6-, 2-Methyl-4-chlortriazinyl-6-, 2-Phenyl-4-chlortriazinyl-6-, 2,4-Difluortriazinyl-6-, Monofluortriazynylreste, die durch Amino-, Alkylamino-, Aralkylamino-, Acylaminogruppen substituiert sind, wobei Alkyl, insbesondere gegebenenfalls substituiertes $C_1$-$C_4$-Alkyl, Aralkyl, insbesonderegegebenenfalls substituiertes Phenyl, $C_1$-$C_4$-Alkyl und Aryl, insbesondere gegebenenfalls durch Sulfo-, Alkyl-, insbesondere $C_1$-$C_4$-Alkyl, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluortriazinyl-6, 2-Methylamino-4-fluortriazinyl-6, 2-Ethylamino-4-fluortriazinyl-6, 2-Isopropylamino-4-chlortriazinyl-6, 2-Dimethylamino-4-fluortriazinyl-6, 2-Diethylamino-4-fluortriazinyl-6, 2-β-Methoxyethylamino-4-fluortriazinyl-6, 2-β-Hydroxyethylamino-4-fluortriazinyl-6, 2-Di-(β-hydroxyethylamino)-4-fluortriazinyl-6, 2-β-Sulfoethylamino-4-fluortriazinyl-6, β-Sulfoethylmethylamino-4-fluortriazinyl-6, 2-Carboxymethylamino-4-fluortriazinyl-6, 2-β-Cyanethylamino-4-fluortriazinyl-6, 2-Benzylamino-4-fluortriazinyl-6, 2-β-Phenylethylamino-4-fluortriazinyl-6, 2-Benzylmethylamino-4-fluortriazinyl-6, 2-(x-Sulfobenzyl)amino-4-fluortriazinyl-6, 2-Cyclohexylamino-4-fluortriazinyl-6, 2-(o-, m-, p-Methylphenyl)amino-4-fluortriazinyl-6, 2-(o-, m-, p-Sulfophenyl)amino-4-fluortriazinyl-6, 2-(2′, 5′-Disulfophenyl)amino-4-fluortriazinyl-6, 2-(o-, m-, p-Chlorphenyl)amino-4-fluortriazinyl-6, 2-(o-, m-, p-Methoxyphenyl)-4-fluortriazinyl-6, 2-(2′-Methyl-4′-sulfophenyl)amino-4-fluortriazinyl-6, 2-(2′-Methyl-5′-sulfophenyl)amino-4-fluortriazinyl-6, 2-(2′-Chlor-4′-sulfophenyl)-amino-4-fluortriazinyl-6, 2-(2′-Chlor-5′-sulfophenyl)amino-4-fluortriazinyl-6, 2-(2′-Methoxy-4′-sulfophenyl)amino-4-fluortriazinyl-6, 2-(o-, m-, p-Carboxyphenyl)amino-4-fluortriazinyl-6, 2-(2′,4′-Disulfophenyl)amino-4-fluortriazinyl-6, 2-(3′,5′-Disulfophenyl)amino-4-fluortriazinyl-6, 2-(2′-Carboxy-4-sulfophenyl)amino-4-fluortriazinyl-6, 2-(6′-Sulfonaphthyl-(2′))-amino-4-fluortriazinyl-6, 2-(4′,8′-Disulfonaphthyl-(2′))-amino-4-fluortriazinyl-6, 2-(6′,8′-Disulfonaphthyl-(2′))-amino-4-fluortriazinyl-6, 2-(N-Methylphenyl)amino-4-fluortriazinyl-6, 2-(N-Ethylphenyl)amino-4-fluortriazinyl-6, 2-(N-β-Hydroxyethylphenyl)amino-4-fluortriazinyl-6, 2-(N-Isopropylphenyl)amino-4-fluortriazinyl-6, 2-Morpholino-4-fluortriazinyl-6, 2-Piperidino-4-fluortriazinyl-6, 2-(4′,6′,8′-Trisulfonaphthyl-(2′))-4-fluortriazinyl-6, 2-(3′,6′,8′-Trisulfonaphthyl-(2′))-4-fluortriazinyl-6, 2-(3′,6′-Disulfonaphthyl-(1′))-4-fluortriazinyl-6, Mono-, Di- oder Trihalogenpyrimidinylreste, wie 2,4-Dichlorpyrimidinyl-6-, 2,4,5-Trichlorpyrimidinyl-6, 2,4-Dichlor-5-nitro- oder -5-methyl- oder -5-carboxymethyl- oder -5-carboxy- oder -5-cyano- oder -5-vinyl- oder -5-sulfo- oder -5-mono- oder -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidinsulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4′, 5′-Dichlorpyridazon-6′-yl-1′)-phenylsulfonyl- oder -carbonyl-, β-(4′,5′-Dichlorpyridazon-6′-yl-1′)-ethylcarbonyl-, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-fluortriazinyl-6)-carbamyl-, N-Methyl- oder N-Ethyl-N-(2,4-dichlortriazinyl-6)-aminoacetyl-, N-Methyl-N-(2,3-dichlorchinoxalin-6-sulfonyl)aminoacetyl-, N-Methyl-N-(2,3-dichlorchinoxalin-6-carbonyl)-aminoacetyl- sowie die entsprechenden Brom- und Fluorderivate der oben erwähnten Chlorsubstituierten heterocyclischen Reste, unter diesen beispielsweise 2-Fluor-4-pyrimidinyl-, 2,6-Difluor4-pyrimidinyl-, 2,6-Difluor-5-chlor-4-pyrimidinyl-, 2-Fluor- 5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluo-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinylreste; sulfonylgruppenhaltige Triazinreste, wie 2,4-Bis-(phenylsulfonyl)triazinyl-6-, 2-(3′-Carboxyphenyl)sulfonyl-4-chlortriazinyl-6-, 2-(3′-Sulfophenyl)sulfonyl-4-chlortriazinyl-6-, 2,4-Bis-(3′-carboxyphenylsulfonyl)triazinyl-6-Reste; sulfonylgruppenhaltige Pyrimidinringe, wie 2-Carboxymethylsulfonylpyrimidinyl-4-, 2-Methylsulfonyl-6-methylpyrimidinyl-4-, 2-Methylsulfonyl-6-Ethylpyridiminyl-4-, 2-Phenylsulfonyl-5-chlor-6-methylpyrimidinyl-, 2,6-Bismethylsulfonylpyrimidinyl-4-, 2,6-Bismethylsulfonyl-5-chlorpyrimidinyl-4-, 2,4-Bismethylsulfonylpyrimidin-5-sulfonyl-, 2-Methylsulfonylpyrimidinyl-4, 2-Phenylsulfonylpyrimidinyl-4-, 2-Trichlormethylsulfonyl-6-methylpyrimidinyl-4-, 2-Methylsulfonyl-5-chlor-6-methylpyrimidinyl-4-, 2-Methylsulfonyl-5-brom-6-methylpyrimidinyl-4-, 2-Methylsulfonyl-5-chlor-6-ethylpyrimidinyl-4-, 2-Methylsulfonyl-5-chlor-6-chlormethylpyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Trismethylsulfonylpyrimidinyl-4-, 2-Methylsulfonyl-5,6-dimethylpyrimidinyl-4-, 2-Ethylsulfonyl-5-chlor-6-methylpyrimidinyl-4-, 2-Methylsulfonyl-6-chlorpyrimidinyl-4-, 2,6-Bismethylsulfonyl-5-chlorpyrimidinyl-4-, 2-Methylsulfonyl-6-carboxypyrimidinyl-4-, 2-Methylsulfonyl-5-sulfopyrimidinyl-4-, 2-Methylsulfonyl-6-carbomethoxypyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methylpyrimidinyl-4-,

2-Methylsulfonyl-5-brompyrimidinyl-4-, 2-Phenylsulfonyl-5-chlorpyrimidinyl-4-, 2-Carboxymethylsulfonyl-5-chlor-6-methylpyrimidinyl-4-, 2-Methylsulfonyl-6-chlorpyrimidin-4- und -5-carbonyl-, 2,6-Bis(methylsulfonyl)pyrimidin-4- oder -5-carbonyl-, 2-Ethylsulfonyl-6-chlorpyrimidin-5-carbonyl-, 2,4-Bis(methylsulfonyl)-pyrimidin-5-sulfonyl-, 2-Methylsulfonyl-4-chlor-6-methylpyrimidin-5-sulfonyl- oder -carbonylringe; ammoniumgruppenhaltige Triazinringe, wie Trimethylammonium-4-phenylamino- oder -4-(o-, m- oder p-sulfophenyl)aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)hydrazinium-4-phenylamino- oder -4-(o-, m-oder p-sulfophenyl)aminotriazinyl-6-, 2-N-Aminopyrrolidinium- oder 2-N-Aminopiperidinium-4-phenylamino- oder -4-(o-, m- oder p-sulfophenyl)aminotriazinyl-6-, ferner 4-Phenylamino- oder 4-(Sulfophenylamino)triazinyl-6-Reste, die in 2-Stellung über eine Stickstoffbindung das 1,4-Bisazabicyclo-[2,2,2]-octan oder das 1,2-Bisazabicyclo-[0,3,3]-octan quartär gebunden enthalten, 2-Pyridinium-4-phenylamino- oder -4-(o-, m- oder p-sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Ethoxy- oder Aroxy-, wie Phenoxy- oder Sulfophenoxygruppen substituiert sind; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder carbonyl- und die entsprechenden, im ankondensierten Benzolring Sulfogruppen enthaltenden 2-Sulfonylbenzthiazol-5- oder -6-carbonyl- oder -sulfonylderivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonylderivate, N-Oxyd des 4-Chlor- oder 4-Nitrochinolin-5-carbonyls oder auch die Reste 5-Chlor-2,6-difluor-1,3-dicyanphenyl, 2,4-Difluor-1,3,5-tricyanphenyl, 2,4,5-Trifluor-1,3-dicyanphenyl, 2,4-Dichlor-5-methylsulfonylpyrimidinyl-6, 2,4-Trichlor-5-ethylsulfonylpyrimidinyl-6, 2-Fluor-5-methylsulfonyl-6′-(2′-sulfophenylamino)pyrimidinyl-4.

Des weiteren sind Reaktivgruppen der aliphatischen Reihe zu nennen, wie Acryloyl-, Mono-, Di- oder Trichloracryloyl-, wie $-CO-CH=CH-Cl$-, $-CO-CCl=CH_2$-, $-CO-CCl=CH-CH_3$-, ferner $-CO-CCl=CH-COOH$-, $-CO-CH=CCl-COOH$-, β-Chlorpropionyl, 3-Phenylsulfonylpropionyl-, 3-Methylsulfonylproprionyl-, β-Sulfatoethylaminosulfonyl-, Vinylsulfonyl-, β-Chlorethylsulfonyl-, β-Sulfatoethylsulfonyl-, β-Methylsulfonylethylsulfonyl-, β-Phenylsulfonylethylsulfonyl-, 2-Fluor-2-chlor-3,3-difluorcyclobutan-1-carbonyl-, 2,2,3,3,-Tetrafluorcyclobutancarbonyl-1- oder -sulfonyl-1-, β-(2,2,3,3-Tetrafluorcyclobutyl-1)-acryloyl-, α- oder β-Bromacryloyl-, α- oder β-Alkyl- oder Arylsulfonylacryloylgruppe, wie α- oder β-Methylsulfonylacryloyl.

Im Rahmen der allgemeinen Formel I entsprechen folgende Farbstoffe bevorzugten Verbindungen:

a) Reaktivfarbstoffe der Formel I, dadurch gekennzeichnet, dass in der allgemeinen Formel I X für den Rest einer fluorhaltigen Reaktivgruppe der Pyrimidinreihe, für den Rest des Dichlortriazins oder für den Rest einer Reaktivkomponente aus der Reihe der Monochlortriazine steht und B für eine direkte Bindung steht sowie R, $R_1$, u, v, $R_2$ und $R_3$ die unter Formel I angegebene Bedeutung besitzen.

b) Reaktivfarbstoffe der Formel:

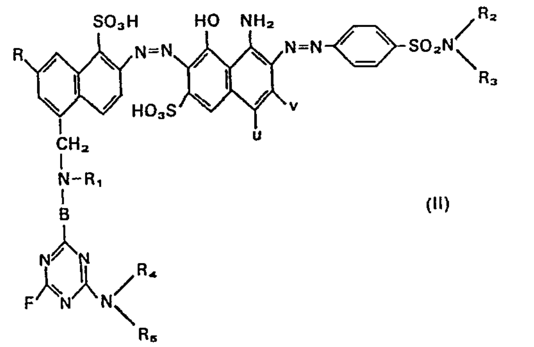

(II)

worin R, $R_1$, B, u, v, $R_2$ und $R_3$ die unter Formel I angegebene Bedeutung haben;

$R_4$ = Wasserstoff oder gegebenenfalls substituiertes $C_1$-$C_4$-Alkyl, und

$R_5$ = Wasserstoff oder gegebenenfalls substituiertes $C_1$-$C_4$-Alkyl oder aromatischer Rest, der maximal eine Sulfogruppe enthalten kann, wobei die Reste $R_4$ und $R_5$ gegebenenfalls unter Einschluss eines Heteroatoms einen Ring bilden können.

c) Reaktivfarbstoffe der Formel:

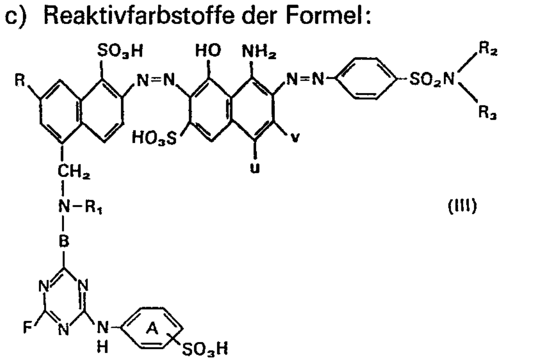

(III)

worin R, $R_1$, B, u, v, $R_2$ und $R_3$ die unter Formel I angegebene Bedeutung haben, und der Benzolring A durch $C_1$-$C_4$-Alkyl, $C_1$-$C_4$-Alkoxy und Halogenatome wie Fluor, Chlor und Brom substituiert sein kann.

Die erfindungsgemässen Azofarbstoffe der Formel I sind beispielsweise durch folgende Verfahren zugänglich:

1) Amine der Formel:

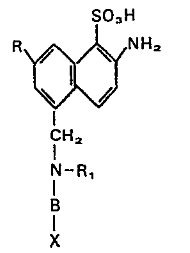

(IV)

worin R, $R_1$, B und X die angegebene Bedeutung haben,
werden diazotiert und mit Kupplungskomponenten der Formel:

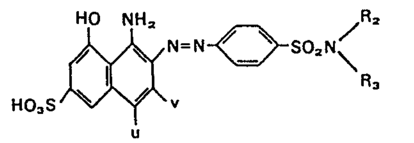

(V)

worin u, v, $R_2$ und $R_3$ die angegebene Bedeutung haben,
vereinigt.

2) Farbstoffe der Formel:

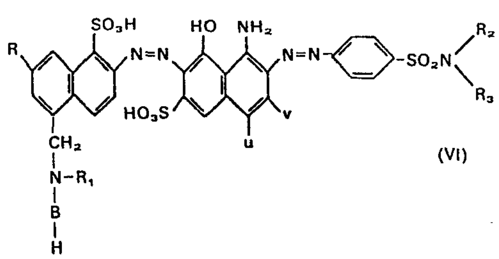

(VI)

worin R, $R_1$, B, D, $R_2$, $R_3$, u und v die angegebene Bedeutung haben,
werden mit einer Reaktivkomponente

Y−X (VII)

worin X die oben angegebene Bedeutung hat und Y für eine abspaltbare Gruppe steht,
unter Abspaltung von HY umgesetzt.

Amine der Formel IV werden hergestellt durch Kondensation von Aminen der Formel:

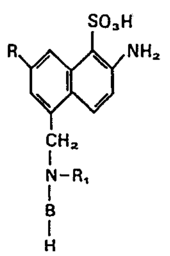

(VIII)

worin R, $R_1$ und B die oben angegebene Bedeutung haben,
mit einer Reaktivkomponente der Formel VII unter Abspaltung von HY.

Beispiele für Amine der Formel VIII sind:

2-Amino-5-aminomethylnaphtalin-1-sulfonsäure, 2-Amino-5-N-methylaminomethylnaphthalin-1-sulfonsäure, 2-Amino-1,7-disulfo-5-aminoethylnaphthalin, 2-Amino-1,7-disulfo-5-N-methylaminomethylnaphthalin, 2-Amino-1,7-disulfo-5-N-(3′-aminobenzoyl)aminomethylnaphthalin (hergestellt durch Kondensation von 2-Amino-1,7-disulfo-5-aminomethylnaphthalin mit 3-Nitrobenzoylchlorid und anschliessende Reduktion der Nitrogruppe).

Die Kupplungskomponenten der Formel V werden hergestellt durch Kuppulung von diazotierten Aminen der Formel:

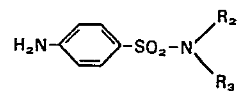

mit Kupplungskomponenten der Formel:

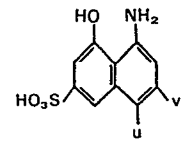

worin u und v die angegebene Bedeutung haben, in saurem bis schwach saurem pH-Bereich (d.h. pH 5 und niedriger).

Die Herstellung der Farbstoffe der Formel VI erfolgt beispielsweise durch Kupplung von diazotierten Aminen der Formel IV, worin B = direkte Bindung oder aliphatisches Brückenglied, mit Kupplungskomponenten der Formel V.

Geeignete Reaktivkomponenten der Formel VII sind beispielsweise solche, die den vorgenannten Reaktivgruppen zugrunde liegen, d.h. im allgemeinen die Halogenide, insbesondere die Chloride der genannten Komponenten X.

Aus der grossen Zahl der zur Verfügung stehenden Verbindungen seien hier auszugsweise erwähnt: Trihalogensymmetrischetriazine, wie Cyanurchlorid und Cyanurbromid, Dihalogenmonoamino- und -monosubstituierteaminosymmetrischetriazine, wie 2,6-Dichlor-4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl)aminotriazin, 2,6-Dichlor-4-(2′, 3′, 2′, 4′, 3′, 4′- oder -3′, 5′-disulfophenyl)aminotriazin, Dihalogenalkoxy- und- aryloxysymmetrischetriazine, wie 2,6-Dichlor-4-methoxytriazin, 2,6-Dichlor-4-ethoxytriazin, 2,6-Dichlor-4-phenoxytriazin, 2,6-Dichlor-4-phenoxytriazin, 2,6-Dichlor-4-(o-, m- oder p-sulfophenyl)oxytriazin, Dihalogenalkylmercapto- und -arylmercaptosymmetrischetriazine, wie 2,6-Dichlor-4-ethylmercaptotriazin, 2,6-Dichlor-4-phenylmercaptotriazin, 2,6-Dichlor-4-(p-methylphenyl)mercaptotriazin, 2,4,6-Trifluortriazin, 2,4-Difluor-6-(o-, m-, p-methylphenyl)aminotriazin, 2,4-Difluor-6-(o-, m-, p-sulfophenyl)aminotriazin, 2,4-Difluor-6-methoxytriazin, 2,4-Difluor-6-(2′,5′-disulfophenyl)aminotriazin, 2,4-Difluor-6-(6′-sulfonaphthyl-2′)-aminotriazin, 2,4-Difluor-6-(o-, m-, p-ethylphenyl)aminotriazin, 2,4-Difluor-6-(o-, m-, p-chlorphenyl)aminotriazin, 2,4-Difluor-6-(o-, m-, p-methoxyphenyl)aminotriazin, 2,4-Difluor-6-(2′-methyl-5′-sulfophenyl)aminotriazin, 2,4-Difluor-6-(2′-methyl-4′-sulfophenyl)-aminotriazin, 2,4-Difluor-6-(2′-chlor-4′-sulfophenyl)aminotriazin, 2,4-Difluor-6-(2′-chlor-5'-sulfophenyl)aminotriazin, 2,4-Difluor-6-(2'-methoxy-4'-sulfophenyl)aminotriazin, 2,4-Difluor-6-(o-, m-, p-carboxyphenyl)aminotriazin, 2,4-Difluor-6-(N-methylphenyl)aminotriazin, 2,4-Difluor-6-(N-ethylphenyl)aminotriazin, 2,4-Difluor-6-(N-isopropylphenyl)aminotriazin, 2,4-Difluor-6-cyclohexylaminotriazin, 2,4-Difluor-6-morpholinotriazin, 2,4-Difluor-6-piperidinotriazin, 2,4-Difluor-6-benzylaminotriazin, 2,4-Difluor-6-N-methylbenzylaminotriazin, 2,4-Difluor-6-β-phenylethylaminotriazin, 2,4-Difluor-6-(X-sulfobenzyl)aminotriazin, 2,4-Difluor-6-(2',4'-disulfophenyl)aminotriazin, 2,4-Difluor-6-(3',5'-disulfophenyl)aminotriazin, 2,4-Difluor-6-(2'-carboxy-4'-sulfophenyl)aminotriazin, 2,4-Difluor-6-(2',5'-disulfo-4-methoxyphenyl)-aminotriazin, 2,4-Difluor-(2'-methyl-4',6'-disulfophenyl)aminotriazin, 2,4-Difluor-(6',8'-disulfonaphthyl-(2'))-aminotriazin, 2,4-Difluor-(4',8'-disulfonaphthyl-(2'))-aminotriazin, 2,4-Difluor-(4',6',8'-trisulfonaphthyl-(2'))-aminotriazin, 2,4-Difluor-(3',6',8'-trisulfonaphthyl-(2'))-aminotriazin, 2,4-Difluor-(3',6'-disulfonaphthyl-(1'))-aminotriazin, 2,4-Difluor-6-aminotriazin, 2,4-Difluor-6-methylaminotriazin, 2,4-Difluor-6-ethylaminotriazin, 2,4-Difluor-6-methoxytriazin, 2,4-Difluor-6-methoxyethylaminotriazin, 2,4-Difluor-6-dimethylaminotriazin, 2,4-Difluor-6-diethylaminotriazin, 2,4-Difluor-6-isopropylaminotriazin; Tetrahalogenpyrimidine, wie Tetrachlor-, Tetrabrom- oder Tetrafluorpyrimidin, 2,4,6-Trihalogenpyrimidine, wie 2,4,6-Trichlor-, -Tribrom- oder -Trifluorpyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy- oder -5-carboethoxy- oder -5-carboxymethyl- oder -5-mono-, -di- oder -trichlormethyl- oder -5-carboxy- oder -5-sulfo- oder -5-cyano- oder -5-vinylpyrimidin, 2,4-Difluor-6-methylpyrimidin, 2,6-Difluor-4-methyl-5-chlorpyrimidin, 2,4-Difluorpyrimidin-5-ethylsulfon, 2,6-Difluor-4-chlorpyrimidin, 2,4,6-Trichlor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trifluor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitropyrimidin, 2,4-Difluor-5-trifluormethylpyrimidin, 2,4-Difluor-5-methylsulfonylpyrimidin, 2,4-Difluor-5-phenylpyrimidin, 2,4-Difluor-5-carbonamidopyrimidin, 2,4-Difluor-5-carbomethoxypyrimidin, 2,4-Difluor-6-trifluormethylpyrimidin, 2,4-Difluor-6-carbonamidopyrimidin, 2,4-Difluor-6-carbomethoxypyrimidin, 2,4-Difluor-6-phenylpyrimidin, 2,4-Difluor-6-cyanpyrimidin, 2,4,6-Trifluor-5-methylsulfonylpyrimidin, 2,4-Difluor-5-sulfonamidopyrimidin, 2,4-Difluor-5-chlor-6-carbomethoxypyrimidin, 5-Trifluormethyl-2,4-difluorpyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid; Pyrimidinreaktivkomponenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bismethylsulfonyl-6-methylpyrimidin, 2,4-Bisphenylsulfonyl-5-chlor-6-methylpyrimidin, 2,4,6-Trismethylsulfonylpyrimidin, 2,6-Bismethylsulfonyl-4,5-dichlorpyrimidin, 2,4-Bismethylsulfonylpyrimidin-5-sulfonsäurechlorid, 2-Methylsulfonyl-4-chlorpyrimidin, 2-Phenylsulfonyl-4-chlorpyrimidin, 2,4-Bistrichlormethylsulfonyl-6-methylpyrimidin, 2,4-Bismethylsulfonyl-5-chlor-6-methylpyrimidin, 2,4-Bismethylsulfonyl-5-brom-6-methylpyrimidin, 2-Methylsulfonyl-4,5-dichlor-6-methylpyrimidin, 2-Methylsulfonyl-4,5-dichlor-6-chlormethylpyrimidin, 2-Methylsulfonyl4-chlor-6-methylpyrimidin-5-sulfonsäurechlorid, 2-Methylsulfonyl-4-chlor-5-nitro-6-methylpyrimidin, 2,4,5,6-Tetramethylsulfonylpyrimidin, 2-Methylsulfonyl-4-chlor-5,6-dimethylpyrimidin, 2-Ethylsulfonyl-4,5-dichlor-6-methylpyrimidin, 2-Methylsulfonyl-4,6-dichlorpyrimidin, 2,4,6-Trismethylsulfonyl-5-chlorpyrimidin, 2-Methylsulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlorpyrimidin-5-carbonsäure, 2-Methylsulfonyl-4-chlor-5-cyan-6-methoxypyrimidin, 2-Methylsulfonyl-4,5-dichlorpyrimidin, 4,6-Bismethylsulfonylpyrimidin, 4-Methylsulfonyl-6-chlorpyrimidin, 2-Sulfoethylsulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bismethylsulfonyl-5-chlorpyrimidin, 2-Phenylsulfonyl-4,5-dichlorpyrimidin, 2-Phenylsulfonyl4,5-dichlor-6-methyl pyrimidin, 2-Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-Bis-(2'- oder 3'- oder 4'-carboxyphenylsulfonyl)-5-chlor-6-methylpyrimidin, 2-Methylsulfonyl-6-chlorpyrimidin-4- oder -5-carbonsäurechlorid, 2-Ethylsulfonyl-6-chlorpyrimidin-4- oder -5-carbonsäurechlorid, 2,6-Bis(methylsulfonyl)pyrimidin-4-carbonsäurechlorid, 2-Methylsulfonyl-6-methyl-4-chlor- oder -4-brompyrimidin-5-carbonsäurechlorid oder -bromid, 2,6-Bis(methylsulfonyl)-4-chlorpyrimidin-5-carbonsäurechlorid; weitere Reaktivkomponenten der heterocyclischen Reihe mit reaktiven Sulfonylsubstituenten sind beispielsweise 3,6-Bisphenylsulfonylpyridazin, 3-Methylsulfonyl-6-chlorpyridazin, 3,6-Bistrichlormethylsulfonylpyridazin, 3,6-Bismethylsulfonyl-4-methylpyridazin, 2,5,6-Trismethylsulfonylpyrazin, 2,4-Bismethylsulfonyl-1,3,5-triazin, 2,4-Bismethylsulfonyl-6-(3'-sulfophenylamino)-1,3,5-triazin, 2,4-Bismethylsulfonyl-6-N-methylanilino-1,3,5-triazin, 2,4-Bismethylsulfonyl-6-phenoxy-1,3,5-triazin, 2,4-Bismethylsulfonyl-6-trichlorethoxy-1,3,5-triazin, 2,4,6-Trisphenylsulfonyl-1,3,5-triazin, 2,4-Bismethylsulfonylchinazolin, 2,4-Bistrichlormethylsulfonylchinolin, 2,4-Biscarboxymethylsulfonylchinolin, 2,6-Bis-(methylsulfonyl)pyridin-4-carbonsäurechlorid und 1-(4'-Chlorcarbonylphenyl oder 2'-Chlorcarbonylethyl)-4,5-bismethylsulfonylpyridazon-(6); weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Diichlorchinazolin-6- oder -7-carbonsäurechlorid oder -7-sulfonsäurechlorid sowie die entsprechenden Bromverbindungen, 2- oder 3- oder 4-(4'-, 5'-Dichlorpyridazon-6'-yl-1')-phenylsulfonsäurechlorid oder -carbonsäurechlorid sowie die entsprechenden Bromverbindungen, β-(4',5'-Dichlorpyridazon-6'-yl-1')-ethylcarbonsäurechlorid, 2-Chlorchinoxalin-3-carbonsäurechlorid und die entsprechenden Bromverbindungen, N-Methyl-N-(2,4-dichlortriazinyl-6)-carbamidsäurechlorid, N-Methyl-N-(2-chlor-4-dimethylaminotriazinyl-6)-carbamidsäurechlorid, N-Methyl-N-(2-chlor-4-dimethylaminotriazinyl-6)-carbamidsäurechlorid, N-Methyl- oder N-Ethyl-N-(2,4-dichlortriazinyl-6)-aminoacetylchlorid, N-Methyl-, N-Ethyl- oder N-Hydroxyethyl-N-(2,3-dichlorchinoxalin-6-sulfonyl- oder -6-carbonyl)aminoacetylchlorid und die entsprechenden Bromderivate, ferner 2-Chlorbenzthiazol-5- oder -6-carbonsäurechlorid oder -5-oder -6-sulfonsäurechlorid und die entsprechenden Bromverbindungen, 2-Arylsulfonyl- oder 2-Alkylsulfonylbenzthiazol-5- oder -6-carbonsäurechlorid oder -5- oder -6-sulfonsäurechlorid, wie 2-Methylsulfonyl- oder 2-Ethylsulfonyl- oder 2-Phenylsulfonylbenzthiazol-5- oder -6-sulfonsäurechlorid oder -5- oder -6-carbonsäurechlorid sowie die entsprechenden, im ankondensierten Benzolring Sulfonsäuregruppen enthaltenden 2-Sulfonylbenzthiazolderivate, 3,5-Bismethylsulfonylisothiazol-4-carbonsäurechlorid, 2-Chlorbenzoxazol-5- oder -6-carbonsäurechlorid oder -sulfonsäurechlorid sowie die entsprechenden Bromderivate, 2-Chlorbenzimidazol-5- oder -6-carbonsäurechlorid oder -sulfonsäurechlorid sowie die entsprechenden Bromderivate, 2-Chlor-1-methylbenzimidazol-5- oder -6-carbonsäurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4- oder -5-sulfonsäurechlorid und die entsprechenden Bromderivate. Weiterhin seien genannt: 5-Chlor-2,4,6-trifluorisophthalonitril, 2,4,6-Trifluor-1,3,5-tricyanobenzol, 2,4,5,6-Tetrafluorisophthalonitril, 2,4,6-Trichlor-5-methylsulfonylpyrimidin, 2,4,6-Trichlor-5-ethylsulfonylpyrimidin, 2,4-Difluor-5-methylsulfonyl-6-(2'-sulfophenylamino)pyrimidin.

Aus der Reihe der aliphatischen Reaktivkomponenten sind beispielsweise zu erwähnen: Acrylsäurechlorid, Mono-, Di- oder Trichloracrylsäurechlorid, 3-Chlorpropionsäurechlorid, 3-Phenylsulfonylpropionsäurechlorid, 3-Methylsulfonylpropionsäurechlorid, 3-Ethylsulfonylpropionsäurechlorid, 3-Chlorethansulfochlorid, Chlormethansulfochlorid, 2-Chloracetylchlorid, 2,2,3,3-Tetrafluorcyclobutan-1-carbonsäurechlorid, β-(2,2,3,3-Tetrafluorcyclobutyl-1)-acrylsäurechlorid, β-(2,3,3-Trifluor-2-chlorcyclobutan-1)-carbonsäurechlorid, β-Methylsulfonylacrylsäurechlorid, α-Methylsulfonylacrylsäurechlorid und α-Bromactylsäurechlorid und β-Bromacrylsäurechlorid.

Die neuen Farbstoffe der Formel I eignen sich zum Färben und Bedrucken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmässigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure.

*Beispiel 1*

17,2 g 4-Aminobenzolsulfonamid werden in 500 ml Eiswasser angerührt, mit 28 ml konz. Salzsäure in Lösung gebracht und dann 70 ml 10%ige Natriumnitritlösung eingetropft. Nach beendigter Diazotierung wird der Überschuss an Nitrit mit Amidosulfonsäure zerstört und in die Diazotierung eine neutrale Lösung von 31,9 g 1-Amino-8-oxy-naphthalin-3,6-disulfonsäure eingetropft. Man rührt so lange im pH-Bereich von 1-2 nach, bis die Kupplung beendet ist. Man saugt den Monoazofarbstoff ab und rührt die Paste in 500 ml Wasser an, stellt den pH auf 5 und gibt dann 28 g Natriumhydrogencarbonat zu. Diese Lösung wird mit einer aus 25,2 g 2-Amino-5-aminomethylnaphthalin-1-sulfonsäure nach den Angaben von Beispiel 3 GB-PS Nr. 1431322 erhaltenen Diazotierung versetzt. Nach beendigter Kupplung wird die Temperatur auf 12-15°C eingestellt und, bei pH 8,5, 16,9 g 2,4,6-Trifluor-5-chlorpyrimidin eingetropft und durch gleichzeitige Zugabe von verdünnter Natronlauge der pH zwischen 8,5 und 8,7 gehalten. Der Farbstoff geht während der Acylierung in Lösung. Zur Abscheidung werden 15 Vol.-% Kochsalz zugesetzt. Nach dem Absaugen, Trocknen im Umlufttrockenschrank bei 70° C und Mahlen erhält man ein schwarzes Pulver, das sich leicht in Wasser mit blauer Farbe löst. Der Farbstoff entspricht der Formel:

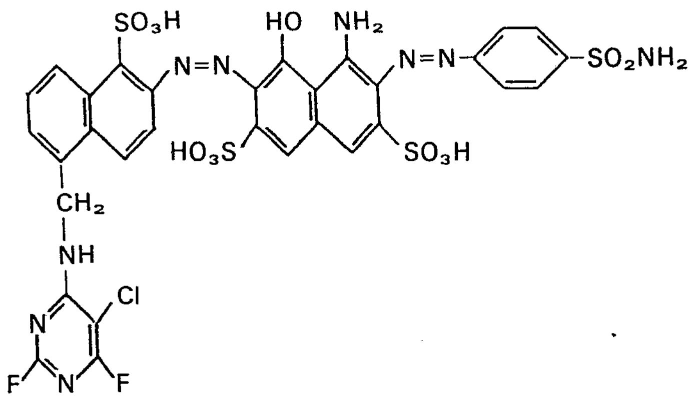

Gleichfalls wertvolle Farbstoffe erhält man, wenn man nach den Angaben des Beispiels 1 verfährt, jedoch für die Kupplung im sauren Medium die in Spalte 1 aufgeführten Diazokomponenten und als Reaktivkomponenten die in Spalte 2 genannten Verbindungen einsetzt, wobei Farbstoffe resultieren, deren Farbtöne in Spalte 3 genannt sind.

| Beispiel | Diazokomponente | Reaktivkomponente | Farbton |
|---|---|---|---|
| 2 | 4-Aminobenzolsulfonamid | 2,4-Difluor-5-chlor-6-methylpyrimidin | dunkelblau |
| 3 | 4-Aminobenzolsulfonamid | 5-Chlor-2,4,6-trifluorisophthalonitril | dunkelblau |
| 4 | 4-Aminobenzolsulfonamid | 2,4,6-Trifluor-1,3,5-tricyanobenzol | dunkelblau |
| 5 | 4-Aminobenzolsulfonamid | 2,4,5,6-Tetrafluorisophthalonitril | dunkelblau |
| 6 | 4-Aminobenzolsulfonamid | 2,4,6-Trichlor-5-methylsulfonylpyrimidin | dunkelblau |
| 7 | 4-Aminobenzolsulfonamid | 2,4,6-Trichlor-5-ethylsulfonylpyrimidin | dunkelblau |
| 8 | 4-Aminobenzolsulfonamid | 2,4-Difluor-5-methylsulfonyl-6-(2'-sulfophenylamino)pyrimidin | dunkelblau |
| 9 | 4-Aminobenzolsulfonamid | 2,4,5,6-Tetrachlorpyrimidin | dunkelblau |
| 10 | 4-Aminobenzolsulfonamid | 2-Methylsulfonyl-4,5-dichlor-6-methylpyrimidin | dunkelblau |
| 11 | 4-Aminobenzolsulfonamid | 2-Amino-4,6-difluortriazin | dunkelblau |
| 12 | 4-Aminobenzolsulfonamid | 2-Methylamino-4,6-difluortriazin | dunkelblau |
| 13 | 4-Aminobenzolsulfonamid | 2-Phenylamino-4,6-difluortriazin | dunkelblau |
| 14 | 4-Aminobenzolsulfonamid | 2-(2'-Sulfophenylamino)-4,6-difluortriazin | dunkelblau |
| 15 | 4-Aminobenzolsulfonamid | 2-(3'-Sulfophenylamino)-4,6-difluortriazin | dunkelblau |
| 16 | 4-Aminobenzolsulfonamid | 2-(4'-Sulfophenylamino)-4,6-difluortriazin | dunkelblau |
| 17 | 4-Aminobenzolsulfonamid | 2-(2'-Methyl-5'-sulfophenylamino)-4,6-difluortriazin | dunkelblau |
| 18 | 4-Aminobenzolsulfonamid | 2-(2'-Chlor-4'-sulfophenyl)amino-4,6-difluortriazin | dunkelblau |
| 19 | 4-Aminobenzolsulfonamid | 2-(6'-Sulfonaphthyl-2'-amino)-4,6-difluortriazin | dunkelblau |
| 20 | 4-Aminobenzolsulfonamid | 2-Methoxyethoxy-4,6-difluortriazin | dunkelblau |
| 21 | 4-Aminobenzolsulfonamid | 2-Amino-4,6-dichlortriazin | dunkelblau |
| 22 | 4-Aminobenzolsulfonamid | 2-Methylamino-4,6-dichlortriazin | dunkelblau |
| 23 | 4-Aminobenzolsulfonamid | 2-Phenylamino-4,6-dichlortriazin | dunkelblau |
| 24 | 4-Aminobenzolsulfonamid | 2-(3'-Sulfophenylamino)-4,6-dichlortriazin | dunkelblau |
| 25 | 4-Aminobenzolsulfonamid | 2-(4'-Sulfophenylamino)-4,6-dichlortriazin | dunkelblau |
| 26 | 4-Aminobenzolsulfonamid | 2-(2'-Methyl-5'-sulfophenylamino)-4,6-dichlortriazin | dunkelblau |
| 27 | 4-Aminobenzolsulfonamid | 2-N-Methylphenylamino-4,6-dichlortriazin | dunkelblau |
| 28 | 4-Aminobenzolsulfonamid | 2,3-Dichlorchinoxalin-6-carbonsäurechlorid | dunkelblau |
| 29 | 4-Aminobenzolsulfonamid | 2,4,6-Trichlortriazin | dunkelblau |

Weitere wertvolle Farbstoffe erhält man nach den Angaben von Beispiel 1, wenn man anstelle von 1-Amino-8-hydroxynaphthalin-3,6-disulfonsäure (H-Säure) die 1-Amino-8-hydroxynaphthalin-4,6-disulfonsäure (K-Säure) einsetzt, als Diazokomponente für die Kupplung im sauren

Medium und als Reaktivkomponente die in den Beispielen 1 bis 29 genannten Verbindungen verwendet, wobei Farbstoffe resultieren, die Baumwolle in blauen Tönen färben, die etwas röter sind als die mit H-Säure.

*Beispiel 30*

17,2 g 4-Aminobenzolsulfonamid werden in 500 ml Eiswasser angerührt, mit 28 ml konz. Salzsäure in Lösung gebracht und dann 70 ml 10%ige Natriumnitritlösung eingetropft. Nach beeindigter Diazotierung wird der Überschuss an Nitrit mit Amidosulfonsäure zerstört und in die Diazotierung eine neutrale Lösung von 31,9 g 1-Amino-8-oxynaphthalin-3,6-disulfonsäure eingetropft. Man rührt so lange nach, bis die Kupplung beendet ist. Man stellt dann den pH mit verdünnter Natronlauge auf 6, gibt 28 g Natriumhydrogencarbonat zu und versetzt diese Lösung mit einer aus 33,2 g 2-Amino-5-aminomethyl-1,7-disulfonaphthalin nach den Angaben von Beispiel 19 der DE-OS Nr. 2913102 erhaltenen Diazotierung. Der resultierende Farbstoff wird durch Aussalzen isoliert. Die Paste wird in 500 ml Wasser angerührt und bei 12-15° C 16,9 g 2,4,6-Trifluor-5-chlorpyrimidin eingetropft, wobei gleichzeitig verdünnter Natronlauge zugesetzt wird, um den pH zwischen 8,5 und 8,7 zu halten. Nach erfolgter Acylierung wird der Farbstoff mit Kochsalz ausgesalzen und abfiltriert. Nach dem Trocknen bei 70° C im Umlufttrockenschrank erhält man ein schwarzes Pulver, das sich in Wasser mit blauer Farbe löst. Der so erhaltene Farbstoff färbt Baumwolle in marineblauen Tönen. Er entspricht der Formel:

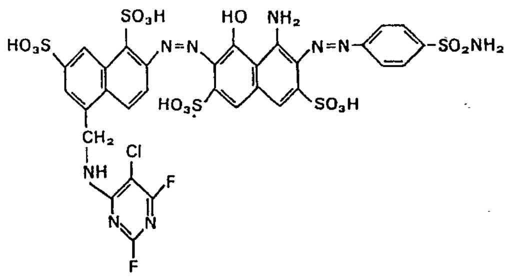

Nach den Angaben dieses Beispiels erhält man weitere Reaktivfarbstoffe, die Baumwolle in den angegebenen Nuancen färben, wenn man für die Kupplung im sauren Medium die in Spalte 1 aufgeführten Diazokomponenten und als Reaktivkomponente die in Spalte 2 genannten Verbindungen einsetzt.

| Beispiel | Diazokomponente | Reaktivkomponente | Farbton |
|---|---|---|---|
| 31 | 4-Aminobenzolsulfonamid | 2,4-Difluor-5-chlor-6-methylpyrimidin | marineblau |
| 32 | 4-Aminobenzolsulfonamid | 2-Amino-4,6-difluortriazin | marineblau |
| 33 | 4-Aminobenzolsulfonamid | 2-Methylamino-4,6-difluortriazin | marineblau |
| 34 | 4-Aminobenzolsulfonamid | 2-Phenylamino-4,6-difluortriazin | marineblau |
| 35 | 4-Aminobenzolsulfonamid | 2-(3'-Sulfophenylamino)-4,6-difluortriazin | marineblau |
| 36 | 4-Aminobenzolsulfonamid | 2-(4'-Sulfophenylamino)-4,6-difluortriazin | marineblau |
| 37 | 4-Aminobenzolsulfonamid | 2-(2'-Methyl-5'-sulfophenylamino)-4,6-difluortriazin | marineblau |
| 38 | 4-Aminobenzolsulfonamid | 2-(2'-Chlor-4'-sulfophenylamino)-4,6-difluortriazin | marineblau |
| 39 | 4-Aminobenzolsulfonamid | 2-(6'-Sulfonaphthyl-2'-amino)-4,6-difluortriazin | marineblau |
| 40 | 4-Aminobenzolsulfonamid | 2-Methoxyethoxy-4,6-difluortriazin | marineblau |
| 41 | 4-Aminobenzolsulfonamid | 2-Amino-4,6-dichlortriazin | marineblau |
| 42 | 4-Aminobenzolsulfonamid | 2-Methylamino-4,6-dichlortriazin | marineblau |
| 43 | 4-Aminobenzolsulfonamid | 2-Phenylamino-4,6-dichlortriazin | marineblau |
| 44 | 4-Aminobenzolsulfonamid | 2-(3'-Sulfophenylamino)-4,6-dichlortriazin | marineblau |

*Anwendungsbeispiele*

*Färbevorschrift*

In einem Färbebecher von 300 ml Inhalt, der sich in einem beheizbaren Wasserbad befindet, werden 168 ml Wasser von 20-25° C vorgelegt. Man teigt 0,3 g des nach Beispiel 1 erhaltenen Farbstoffs mit 2 ml kaltem Wasser gut an und fügt 30 ml heisses Wasser (70° C) zu; dabei löst sich der Farbstoff auf. Die Farbstofflösung wird dem vorgelegten Wasser zugegeben und 10 g Baumwollgarn in dieser Färbeflotte ständig in Bewegung gehalten. Innerhalb 10 min erhöht man die Temperatur der Färbeflotte auf 40-50° C, setzt 10 g wasserfreies Natriumsulfat zu und färbt 30 min weiter. Dann fügt man der Färbeflotte 4 g wasserfreies Natriumcarbonat zu und färbt 60 min bei 40-50° C. Man entnimmt dann das gefärbte Material der Färbeflotte, entfernt die anhaftende Flotte durch Auswringen oder Abpressen und spült das Material zunächst mit kaltem Wasser und dann mit heissem Wasser so lange, bis die Spülflotte nicht mehr angeblutet wird. Anschliessend wird das gefärbte Material in 200 ml einer Flotte, die 0,2 g Natriumalkylsulfat enthält, während 20 min bei Siedetemperatur geseift, erneut gespült und bei 60-70° C in einem Trockenschrank getrocknet. Man erhält eine dunkelblaue Färbung von hervorragenden Wasch- und Lichtechtheiten.

*Klotzvorschrift*

30 Teile des nach Beispiel 1 dargestellten Farbstoffs werden in 1000 Teile Wasser gelöst. Mit dieser Lösung wird ein Baumwollgewebe foulardiert

und bis zu einer Gewichtsabnahme von 90% abgepresst. Die noch feuchte Baumwolle wird bei 70° C während 30 min in einem Bad, welches in 1000 Teilen Wasser 200 Teile kalziniertes Natriumsulfat und 10 Teile kalziniertes Natriumcarbonat gelöst enthält, behandelt. Anschliessend wird die Färbung in üblicher Weise fertiggestellt. Man erhält eine dunkelblaue Färbung mit vorzüglichen Nass- und Lichtechtheiten.

*Druckvorschrift*

Wenn man Baumwollnessel mit einer Druckpaste bedruckt, die im Kilogramm 60 g des nach Beispiel 1 dargestellten Farbstoffs, 100 g Harnstoff, 300 ml Wasser, 500 g Alginatverdickung (60 g Natriumalginat/kg Verdickung) und 10 g Soda enthält und die mit Wasser auf 1 kg aufgefüllt wurde, trocknet, 1 min bei 103° C dämpft, mit heissem Wasser spült und kochend seift, so erhält man einen schwarzen Druck von guter Nass- und Lichtechtheit.

## Patentansprüche

1. Reaktivfarbstoffe der Formel:

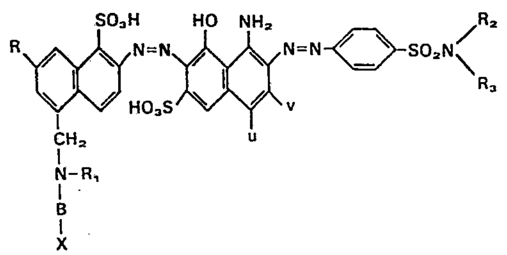

worin

R = Wasserstoff oder eine Sulfogruppe;

$R_1$ = Wasserstoff oder $C_1$-$C_4$-Alkyl;

B = direkte Bindung oder Brückenglied;

X = Reaktivgruppe;

u und v = Wasserstoff oder eine Sulfogruppe, wobei u ≠ v, und

$R_2$ und $R_3$ = Wasserstoff oder $C_1$-$C_4$-Alkyl.

2. Reaktivfarbstoffe der Formel gemäss Anspruch 1, dadurch gekennzeichnet, dass in der allgemeinen Formel X für den Rest einer fluorhaltigen Reaktivgruppe der Pyrimidinreihe, für den Rest des Dichlortriazins oder für den Rest einer Reaktivkomponente aus der Reihe der Monochlortriazine steht und B für eine direkte Bindung steht sowie R, $R_1$, u, v, $R_2$ und $R_3$ die im Anspruch 1 angegebene Bedeutung besitzen.

3. Reaktivfarbstoffe der Formel:

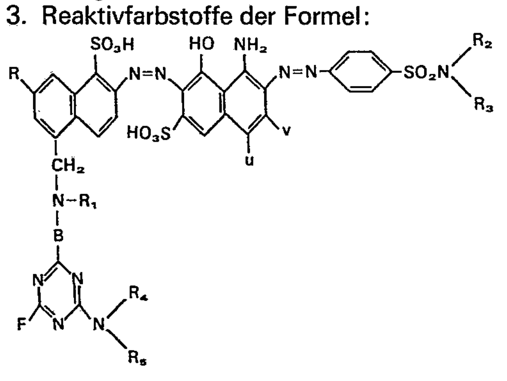

worin R, $R_1$, B, u, v, $R_2$ und $R_3$ die im Anspruch 1 angegebene Bedeutung haben;

$R_4$ = Wasserstoff oder gegebenenfalls substituiertes $C_1$-$C_4$-Alkyl, und

$R_5$ = Wasserstoff oder gegebenenfalls substituiertes $C_1$-$C_4$-Alkyl oder aromatischer Rest, der maximal eine Sulfogruppe enthalten kann, wobei die Reste $R_4$ und $R_5$ gegebenenfalls unter Einschluss eines Heteroatoms einen Ring bilden können.

4. Reaktivfarbstoffe der Formel:

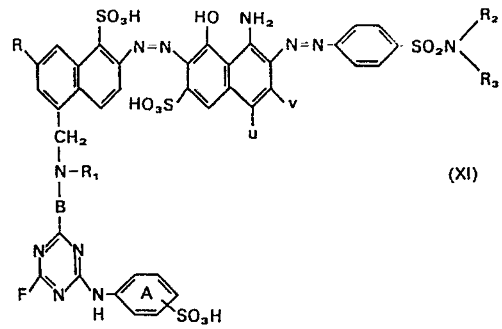

(XI)

worin R, $R_1$, B, u, v, $R_2$ und $R_3$ die im Anspruch 1 angegebene Bedeutung haben, und der Benzolring A durch $C_1$-$C_4$-Alkyl, $C_1$-$C_4$-Alkoxy und Halogenatome wie Fluor, Chlor und Brom substituiert sein kann.

5. Verwendung der Reaktivfarbstoffe gemäss den Ansprüchen 1 bis 4 zum Färben und Bedrucken von stickstoff- und/oder hydroxylgruppenhaltigen Materialien.

## Claims

1. Reactive dyestuffs of the formula:

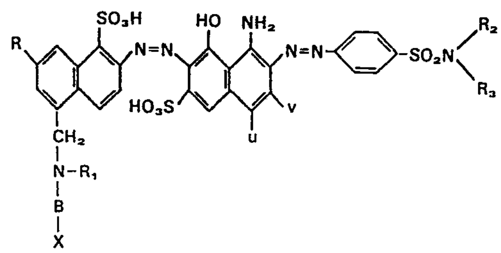

wherein

R = hydrogen or a sulpho group;

$R_1$ = hydrogen or $C_1$-$C_4$-alkyl;

B = a direct bond or a bridge member;

X = a reactive group;

u and v = hydrogen or a sulpho group, and u ≠ v, and

$R_2$ and $R_3$ = hydrogen or $C_1$-$C_4$-alkyl.

2. Reactive dyestuffs of the formula according to Claim 1, characterised in that, in the general formula, X represents the radical of a fluorine-containing reactive group of the pyrimidine series, the radical of dichlorotriazine, or the radical of a reactive component from the monochlorotriazine series, B represents a direct bond, and R, $R_1$, u, v, $R_2$ and $R_3$ have the meaning given in Claim 1.

3. Reactive dyestuffs of the formula:

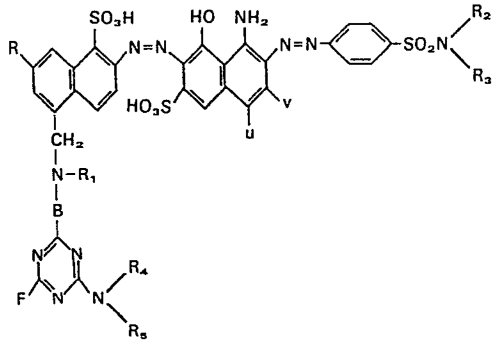

wherein R, $R_1$, B, u, v, $R_2$ and $R_3$ have the meaning given in Claim 1;

$R_4$ = hydrogen or optionally substituted $C_1$-$C_4$-alkyl, and

$R_5$ = hydrogen, optionally substituted $C_1$-$C_4$-alkyl or an aromatic radical, which can contain at most one sulpho group, and wherein the radicals $R_4$ and $R_5$ can form a ring, optionally including a hetero-atom.

4. Reactive dyestuffs of the formula:

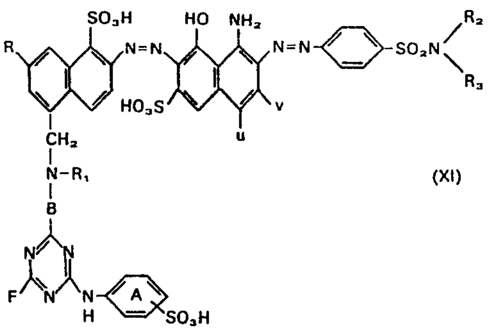

(XI)

wherein R, $R_1$, B, u, v, $R_2$ and $R_3$ have the meaning given in Claim 1, and the benzene ring A can be substituted by $C_1$-$C_4$-alkyl, $C_1$-$C_4$-alkoxy and halogen atoms, such as fluorine, chlorine and bromine.

5. Use of the reactive dyestuffs according to Claims 1 to 4 for dyeing and printing materials containing nitrogen and/or hydroxyl groups.

**Revendications**

1. Colorants réactifs de formule:

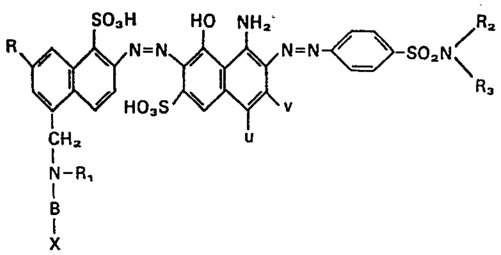

dans laquelle

R = hydrogène ou un groupe sulfo;

$R_1$ = hydrogène ou groupe alkyle en $C_1$-$C_4$;

B = liaison directe ou pont;

X = groupe réactif;

u et v = hydrogène ou un groupe sulfo, avec u $\neq$ v, et

$R_2$ et $R_3$ = hydrogène ou groupe alkyle en $C_1$-$C_4$.

2. Colorants réactifs de formule suivant la revendication 1, caractérisés en ce que, dans la formule générale, X représente le reste d'un groupe réactif contenant du fluor, de la série de la pyrimidine, le reste de la dichlorotriazine ou le reste d'un composant réactif de la série des monochlorotriazines, et B représente une liaison directe, de même que R, $R_1$, u, v, $R_2$ et $R_3$ possèdent la définition indiquée dans la revendication 1.

3. Colorants réactifs de formule:

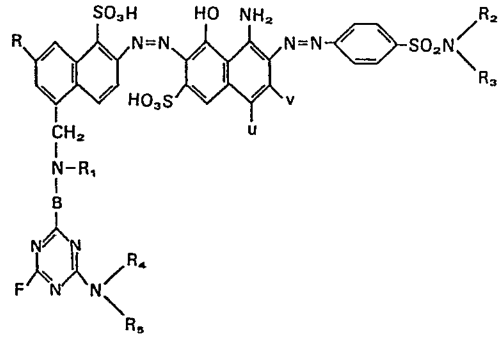

dans laquelle R, $R_1$, B, u, v, $R_2$ et $R_3$ ont la définition indiquée dans la revendication 1;

$R_4$ = hydrogène ou groupe alkyle en $C_1$-$C_4$ éventuellement substitué, et

$R_5$ = hydrogène ou groupe alkyle en $C_1$-$C_4$ éventuellement substitué ou reste aromatique qui peut contenir au maximum un groupe sulfo, et les restes $R_4$ et $R_5$ peuvent éventuellement former un noyau avec inclusion d'un hérétoatome.

4. Colorants réactifs de formule:

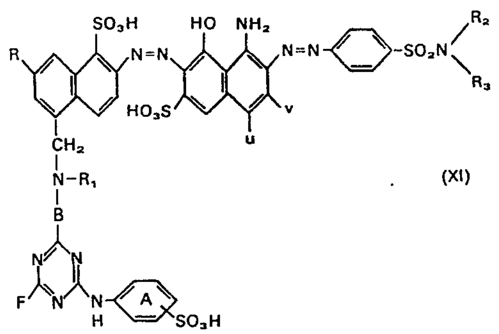

(XI)

dans laquelle R, $R_1$, B, u, v, $R_2$ et $R_3$ possèdent la définition indiquée dans la revendication 1, et le noyau benzénique A peut être substitué par un reste alkyle en $C_1$-$C_4$, un reste alkoxy en $C_1$-$C_4$ et des atomes d'halogènes tels que fluor, chlore et brome.

5. Utilisation des colorants réactifs suivant les revendications 1 à 4 pour la teinture et l'impression de matières contenant de l'azote et/ou des groupes hydroxyle.